# EUROPEAN PATENT APPLICATION

(11) **EP 1 512 513 A2**
(43) Date of publication of application: **09.03.2005**
(21) Application number: 04021228.4
(22) Date of filing: 07.09.2004
(51) Int. Cl.: B29C 45/28, B29C 45/00, B65D 35/08, B65D 47/08, B65D 47/12

(54) **Injection mould for obtaining bottles of plastics material**

(30) Priority: 08.09.2003 IT MC20030106; 10.09.2003 IT MC20030109; 25.11.2003 IT MC20030140
(71) Applicant: Easy Plast SRL, 63035 Offida-Ascoli Piceno (IT)
(72) Inventor: Silla, Roberto, 63020 Massignano Ascoli Piceno (IT); Michetti, Luigino, 63010 Monte Fiore dell'Aso Ascoli Piceno (IT); Cannella, Fabrizio, 63013 Grottammare Ascoli Piceno (IT)
(74) Representative: Reniero, Cirillo Silvano

(57) **Abstract**

An injection mould for producing at least one bottomless bottle container(37, 30) of thermoplastic material, the injection mould having a stationary or die injection part (1) in fluid communication with a source of pressurized molten thermoplastic material at one end thereof, and formed with at least one open moulding cavity (2), and a movable plug-extraction part (3) having at least one overhanging portion (24) so shaped as to enter a respective moulding cavity (2) in the stationary injection part (1) and delimit therewith a peripheral injection gap (25). The overhanging portion (24) is arranged, in use, to be displaced between a rest position away from said stationary injection part (1) and a moulding position in which said overhanging portion (24) thereof is inserted into a respective moulding cavity (2). Each injection gap (25) comprises a first cylindrical length and a second shoulder length with a collar end portion to obtain a bottomless bottle (27, 30) provided with shoulder-collar portion (27a, 27c).

## Description

The present invention concerns in general an injection moulding process for manufacturing bottle containers suitable for use in a number of fields, e.g. cosmetic, pharmaceutical, food, mechanical and the like fields, which in one injection moulding step makes it possible to obtain a container of plastics material having required shape and dimensions, and already provided with an integral flip-top cap or thread or some other fittings for a spring locking plugging member.

Conventional methods of producing bottles of plastics material comprise causing molten plastics material to pass through an extruder, thereby obtaining a semi-finished tubular body, normally being circular in cross-section and having a required diameter.

Such a semi-finished tubular body is then cut into length of a desired length to obtain tubular (cylindrical) sections open at both ends thereof that must be further worked in a second production step carried out in a so-called "butting" machine designed to secure a shoulder portion to one end of an extruded tubular section. A shoulder portion, i.e. the top portion of a bottle container bearing a collar to which a cap or plug is to be secured can have various shapes and is also designed to provide greater rigidity to the upper portion of the bottle also in view of assisting in ensuring tightness between collar and cap, the latter being preferably of a snap-engaging or flip-top or screw type.

A shoulder portion of a bottle, whether it has a threaded collar or a collar designed to be snap engaged by a cap, is obtained by casting molten plastics material into a mould installed on a butting machine and in contact with one end of an extruded tubular section previously fitted in the butting machine, thereby bonding a newly moulded shoulder to a respective extruded tubular section to obtain a bottle of thermoplastic open at its bottom.

Clearly, this method of producing bottomless bottles of plastics material has the inconvenient that each bottle must be produced in a sequence of steps : extrusion of a tubular body, cutting the tubular body and bonding each section to a respective shoulder in a butting machine. Moreover, should a cap either of flip-top, screw or other type be placed on the shoulder collar, further steps are to be provided, i.e. at least one cap moulding and one cap assembling steps, which implies high costs both for investments in plants and production.

A shoulder portion and an extruded tubular section by being united in a butting machine are liable to present faults due to poor bonding, and thus the resulting bottle must be scrapped.

An object of the present invention is to eliminate or drastically reduce the drawbacks referred to above by providing a mould and an injection moulding process suitable for manufacturing a finished bottomless bottle of plastics material having a shoulder portion with a collar provided with a thread or fittings for a snap-engaging or flip-top cap, thereby eliminating the need of a butting machine.

Another object of the present invention is to provide a mould and a moulding process that make it possible to manufacture bottle containers in mass production at low manufacturing costs.

These and other objects are achieved by a two-part injection mould for producing at least one bottomless bottle container of thermoplastic material according to the present invention, having
a stationary or fixed injection part with one end thereof being arranged to be in fluid communication with a source of pressurized molten thermoplastic material, and its other end formed with an open moulding cavity, and
a movable extraction part having an overhanging portion so shaped as to enter said moulding cavity in said stationary injection part and delimit therewith a peripheral injection gap, and arranged, in use, to be displaced between a rest position away from said stationary injection part and a moulding position in which said overhanging portion thereof is inserted into said moulding cavity,
characterized in that
the said injection gap comprises a first cylindrical length and a second shoulder length with a collar end portion for a bottomless bottle to be produced.

Further features and advantages of the present invention will better appear from the following description of preferred embodiments thereof, given by way of non-limiting examples of carrying out the invention, with reference to the accompanying drawings, in which:
Fig. 1 is a cross-section view of a two-part mould having a stationary or fixed injection part and a movable extraction part , the mould being shown in its closed position ready for carrying out an injection step;
Fig. 2 is similar to Fig. 1 and shows the fixed injection part of the mould during an injection step;
Fig. 2a shows the fixed injection part of Fig. 2 having an injection nozzle provided with an inner plugging pin in its open position in which molten material is being injected into a mould cavity;
Fig.3 is a cross-section view of the stationary injection part on an enlarged scale of the mould shown in Fig. 1;
Fig. 4 Shows the mould of Fig. 1 having its movable extraction part moved away from its stationary injection part;
Fig.5 illustrates a detail of Fig. 4 on an enlarged scale;
Fig. 6 is a cross-section view similar to Fig. 1 and showing the two-part mould in an open or spaced apart arrangement;
Fig. 7 is a side view of a bottomless bottle having a collar provided with a thread obtained in the mould as shown in Figs. 2, 2a and 3;
Fig. 7a is a longitudinal cross-section view taken along the line VII-VII of the bottle in Fig. 16;
Fig. 8 illustrates a side view of a bottomless bottle with a snap engaging cap obtained by means of an injection mould according to the present invention;
Fig. 8a is a longitudinal cross-section view taken along line VIII-VIII in Fig. 8;
Fig. 9 is a cross-section view of another embodiment of a two-part mould for obtaining a bottomless bottle integral with a flip-top cap;
Fig. 10 shows a detail of Fig. 9 on an enlarged scale;
Fig. 11 shows the two-part mould shown in Fig. 9 in a spaced apart condition immediately after an injection step;
Fig. 12 illustrates three subsequent steps for engaging a flip-top cap onto the collar edge of a newly injected bottle before being extracted from the injection mould;
Fig.13 shows the detail of Fig. 10 in an intermediate condition during a bottle extraction step;
Fig.14 is similar to Fig. 13 and shows a condition of full extraction of a bottle from the plug part;
Fig.15 shows a side view of a bottomless bottle obtained by means of a two-part mould shown in Figs 9 to 14;
Fig. 15a illustrates a longitudinal cross-section view taken along the line XV-XV of Fig. 1;
Fig. 16 shows the bottle of Fig. 14 with its flip-top cap in a fully open position;
Fig. 16a is a longitudinal cross-section view taken along line XVI-XVI in Fig. 16;
Fig. 17 is a longitudinal cross-section view showing the mould of Fig. 17 in a different operation step;
Fig. 18 is a longitudinal cross-section view showing the mould of Fig. 18 in a different operation step;
Fig. 19 is a view of a two-part mould similar to that of Fig. 17 after a partial rotation movement of the movable extraction part thereof;
Fig. 20 shows a view similar to that of Fig. 19 illustrating the final extraction step of a bottomless bottle with its flip-top cap applied thereto; and
Fig. 21 shows a further extraction step with respect to Fig. 20.

In the accompanying drawings the same or similar parts or components have been indicated with the same reference numerals.

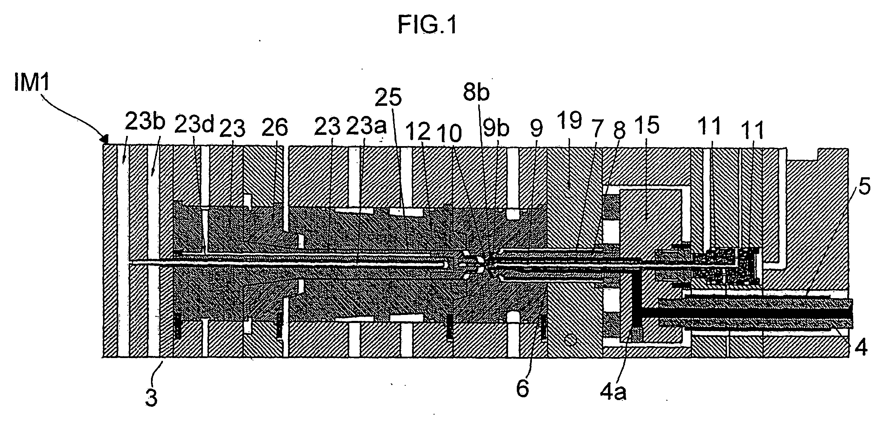

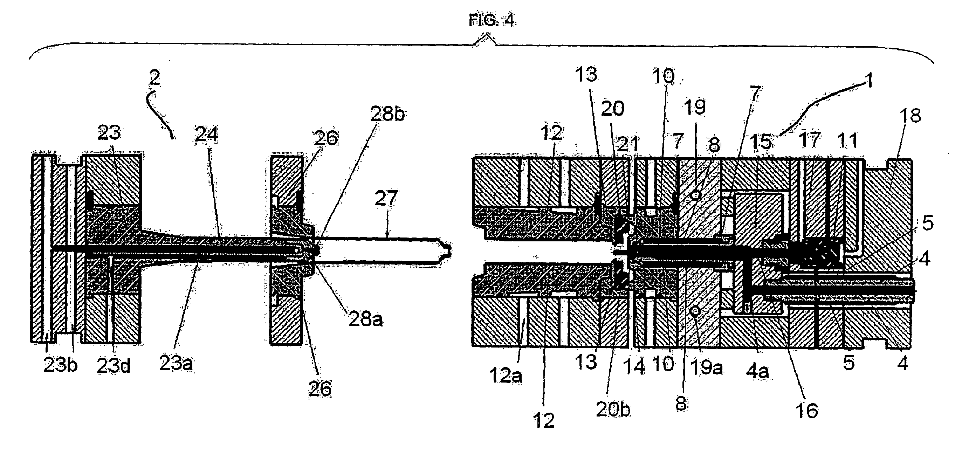

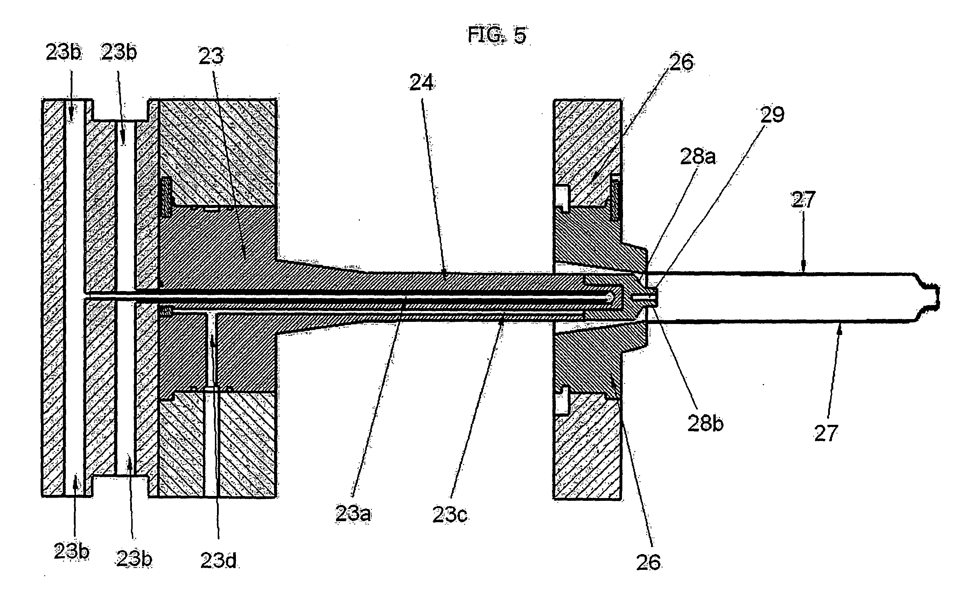

With reference first to Figures 1 to 6, it will be noted that an injection mould IM according to the present invention for injection moulding one or more bottomless bottle container of thermoplastic injection material, typically polyethylene, polypropylene and many others, as it is well known to a person skilled in the art, has a stationary die or female part 1 formed with a longitudinal moulding cavity 2 at its front end (Fig. 4), and a movable extraction or plug part 3 that constitutes the male portion of the mould.

The die 1 is designed to be in fluid communication, e.g. at an inlet duct 4 formed in its end away from the moulding cavity 2, with a source (not shown in the drawings) of pressurized molten thermoplastic material and of any suitable type, e.g. a conventional injection press. Inlet duct 4 preferably locates a heating means, e.g. one or more electric heating resistor 5, arranged to control the injection material at a temperature equal or higher than the melting interval thereof in order to assist flowing of the injection material to an inner hot chamber 6, where the injection material is also kept at a temperature equal or higher than its melting interval owing to the presence therein of one or more electric heating resistors 7.

The hot chamber 6 extends parallel to, but offset with respect to the inlet duct 4, the latter preferably also comprising an intermediate inner transverse section 4a opening into the hot chamber 6. An injection nozzle 8 delimiting an inner longitudinal light or cavity 8a extends throughout the hot chamber 6, preferably surrounded by the heating resistors 7, and has an injection tip 8b facing towards, and opening into, the moulding cavity 2.

The injection nozzle locates therein a spindle 9 that is smaller in cross-section than the inner light of the injection nozzle 8, thus delimiting therewith a peripheral gap 10 through which molten injection material coming from the inlet duct 4, 4a can flow to the moulding cavity 2. The spindle 9 has a thinner front end 9a extending through the injection tip 8b of the injection nozzle, and a conical portion 9b which is a transition section between the body of the spindle and its thinner front end 9a, whereas its rear end extends beyond the injection nozzle 8 and is secured to a driving means arranged to displaced it longitudinally backwards and forwards, upon control, e.g. a fluid operated double-acting cylinder and piston unit 11 of any suitable type, preferably arranged in the die 1 as shown in the drawings. With this arrangement, spindle 9 is displaceable between a plugging position in which its conical portion 9a rests against the inner wall of the injection tip 8b of the injection nozzle to prevent molten material from flowing through the inner light 8a of the injection nozzle to the injection cavity 2, and a withdrawn position in which molten material can flow through the injection nozzle 8.

Advantageously, spindle 9 is formed with a dead axial bore 9c in which a heating fluid for the injection molten material in the injection nozzle 8 is caused to flow.

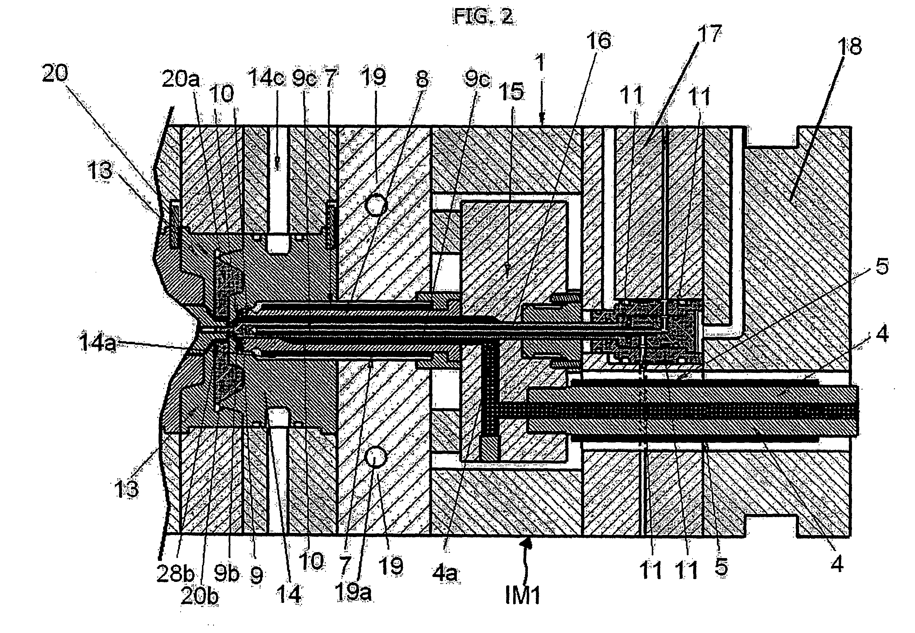

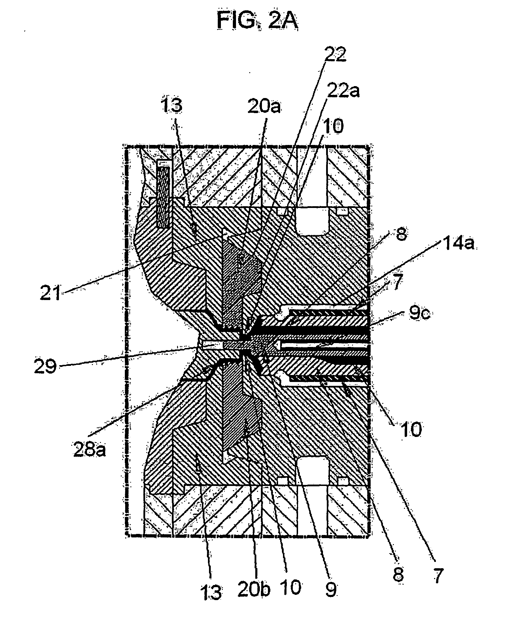

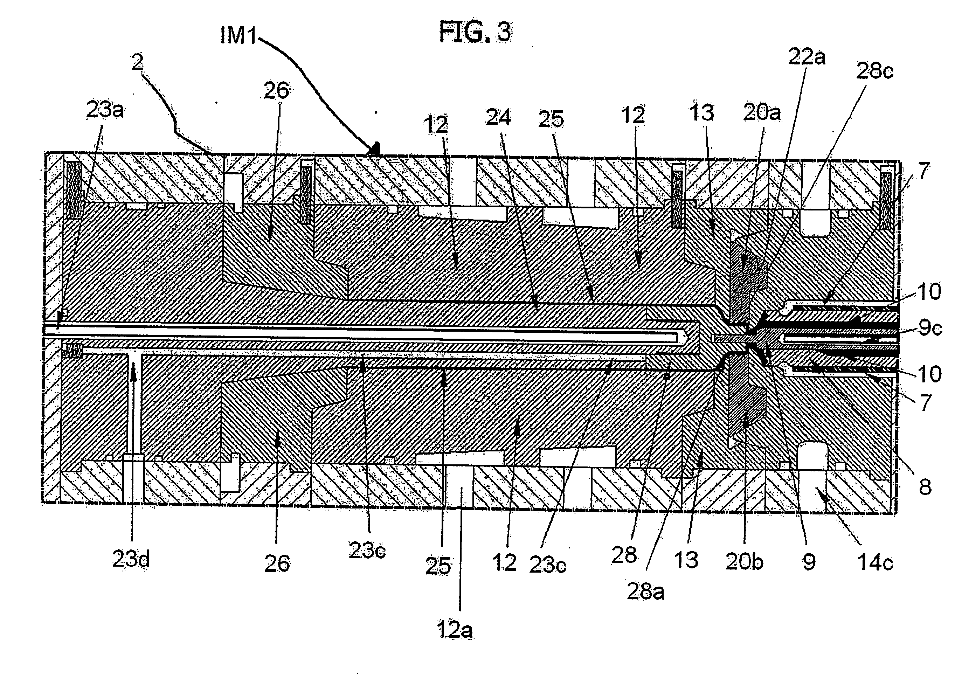

The die 1 preferably comprises a plurality of metal sections, i.e., starting from the mould cavity 2 (Figs. 2 and 3):
a main matrix member 12 delimiting an inner cylindrical length of the moulding cavity 2 that corresponds to the body of a bottle container,
an intermediate matrix member 13 delimiting a shoulder portion of the bottle container,
an injection matrix member 14 having an inner through light 14a, preferably in axial alignment with the moulding cavity 2, designed to locate at least the conical end 9a of the spindle 9 and at least one portion of the heating resistors 7 for the hot chamber 6 and provided with inner ducts 14c for a cooling/heating fluid in order to control the temperature of the material in the injection nozzle 8,
a flow diverting member 15 for the injection material, in which the inner transverse section 4a of the inlet duct 4 is formed, provided with a through aperture or bore 16 in axial alignment with the through light 14a in the matrix member 14 to slidably locate therein an intermediate portion of the spindle 9,
a socket member 17 arranged to locate therein the inlet duct 4 with heating resistors 5 as well as the fluid operated double-acting cylinder and piston unit 11, and
an auxiliary end member 18.

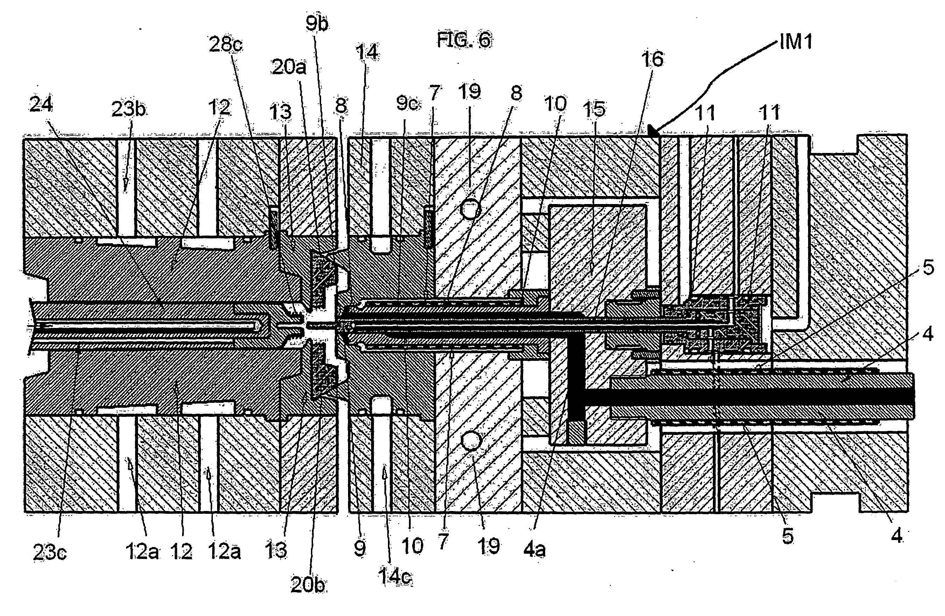

The main matrix member 12 and the intermediate matrix member 13 are slidably mounted so as to be displaceable between a closed working position (Fig. 3) and an open inoperative position (Fig. 6), in which they are axially spaced apart from the injection matrix member 14.

As shown in the drawings, between the injection matrix member 14 and the flow diverting member 15 a spacer member 19 can be provided which has inner ducts 19a for a heating/cooling fluid (water).

Moreover, should a bottle container to injection moulded have a shoulder with an outer thread on its collar, the intermediate matrix member 13 also comprises an inner sector matrix system 20, which has at least two spring loaded jaws 20a and 20b mounted radially slidable in a cavity 21 formed partly in the front face of the intermediate matrix member 13 and partly in the opposite face of the injection matrix member 14. Each spring loaded jaw 20a and 20b has a peripheral inclined surface 22 designed slidably to shape engage with a respective inclined surface 22a formed in the injection matrix member 14, so that when the assembly formed by the main matrix member 12 and the intermediate matrix member 13 is in its closed position each jaw is forced to move close around the thinner front end 9a of the spindle 9, and when the assembly is moved to its open position they automatically move radially apart.

The movable extraction or plug part 3. i.e. the male portion of the mould IM1 comprises a matrix member 23 having an overhanging plug portion 24 so shaped as to enter the moulding cavity 2 and delimit therewith a peripheral injection gap 25. Preferably the male portion also comprises an extraction metal ring 26 that can be axially displaced independently of the matrix member 23. The male or plug portion 3 is arranged, in use, to be displaced between a rest position (Fig. 4) away from the stationary injection part 1 of the mould IM and a moulding position in which the overhanging plug portion 24 is inserted into the moulding cavity 2 (Fig. 3).

The injection moulding gap 25 comprises a first cylindrical length corresponding to the length delimited by the main matrix member 12 and a second shoulder length corresponding to the length thereof delimited by the intermediate matrix member 13 and, when provided, the sectors 20a and 20b to obtain a bottomless bottle 27 (Fig. 4) with or without a threaded collar 27a.

The matrix member 23 is formed with a an axial inner bore 23a extending throughout most of the length of the overhanging plug portion 24 and in fluid communication with a cooling fluid (water) source e.g. through a duct 23b, which is preferably connected in fluid communication with ducts 12a formed in the main matrix member 12. The matrix member 23 is also formed with a longitudinal duct 23c offset with respect to the axial bore 23a and in fluid communication, in use, with a compressed aid source, e.g. through a duct 23d, and designed to deliver, upon control, compressed air between the overhanging plug portion 24 and the bottle container 27 formed thereon, thereby both assisting in separating the plug member from the container and to rapidly cool the just injection formed container.

The overhanging plug member 24 terminates with a cap-shaped shoulder member 28 that is secured, e. g. forced or screwed onto the end of the plug member 24, and has the same outer configuration and dimensions as the plug member. The shoulder member 28 terminates with a tapered shoulder portion 28a and a collar portion 28b, if required provided with an outer thread 28c having the same pitch as that of the thread provided in the jaws 20a and 20b. The collar portion 28b is formed with an axial dead hole 29 arranged to removably receive the thinner front end 9a of spindle 9.

The above described injection mould IM1 operates as follows. Initially, the plug part 3 in moved to its moulding position (Figs 1, 2 and 3). Injection molten material is then fed into the inlet duct 4, while the spindle 9 has been moved to its plugging position and heating resistors 5 and 7 are energized. Upon control, the fluid (oil) operated double acting cylinder and piston unit 11 displaces spindle 9 to its withdrawn position, while its front end 9a remains partly located in the axial dead hole 29 of the plug portion 24, so that molten injection material can flow from the injection nozzle 8 to the injection gap 25 passing through the jaws 20a and 20b, if provided, and the intermediate matrix member 13, thereby forming a bottomless bottle container 27 around the plug portion 24.

The spindle 9 is then caused to move back to its plugging position and a cooling fluid in circulated both in the cooling duct 23a and in the main matrix member 12 for rapid cooling of the just formed container 27.

The assembly formed by the main matrix member 12 and the intermediate matrix member 13 is then displaced away from the injection matrix 14 towards its open position together with the plug part 3 of the injection mould, whereas the spring loaded jaws 20a and 20b automatically move apart from each other (Fig. 6). The plug part 3 is further axially displaced away from the intermediate matrix member 13, that is held in its open position, towards its rest position away from the moulding cavity 2. First, the extraction metal ring 26 reaches its rest position which is located at in intermediate position between the open position of the main matrix member 12 and the rest position of the matrix member 23 (Fig. 4). At the rest position of metal ring member 26 compressed air stats being supplied to duct 23d to assist extraction of the just formed bottle container 27, which abuts at its bottom open end against the extraction metal ring 26, from the overhanging plug member 24. Extraction of the container 27 is completed when the plug member 24 has reached its rest position, where supply of compressed air to duct 23d and of cooling fluid both to the matrix member 23 and the main matrix member 12 is cut off . The injection mould IM1 is now ready for starting a new injection moulding cycle.

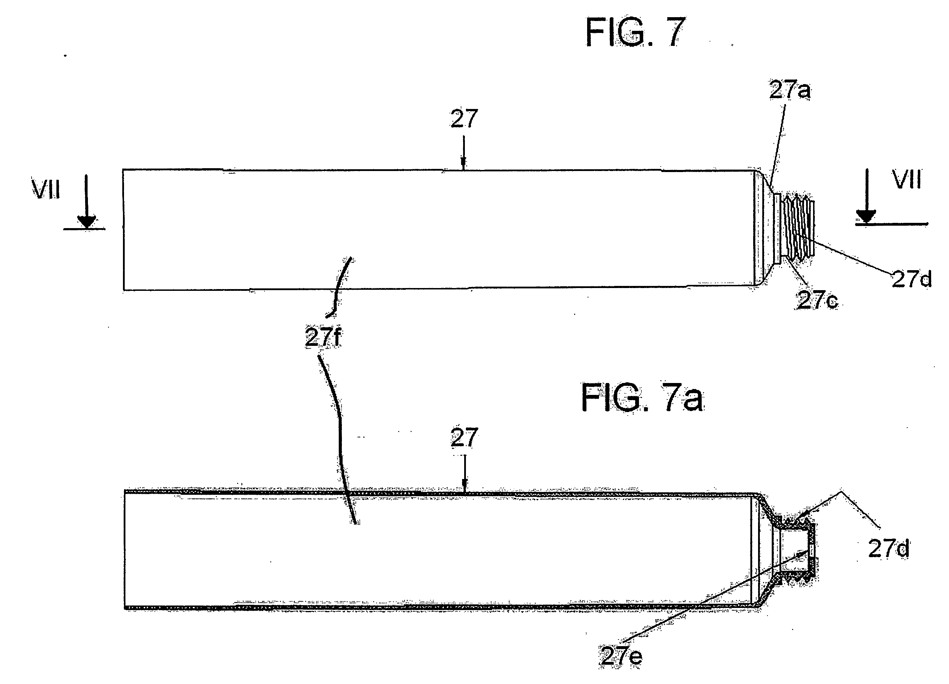

Figs. 7 and 7a show a bottomless bottle container 27 obtained with an injection mould as shown in Figs. 1 to 6 having an inclined tapering shoulder portion 27a and a collar portion 27c provided with a thread 27d and a top opening 27e formed by the thinner front end 9a of spindle 9. The shoulder portion 27a and the collar portion 27c are integral and obtained together with the cylindrical body portion 27f.

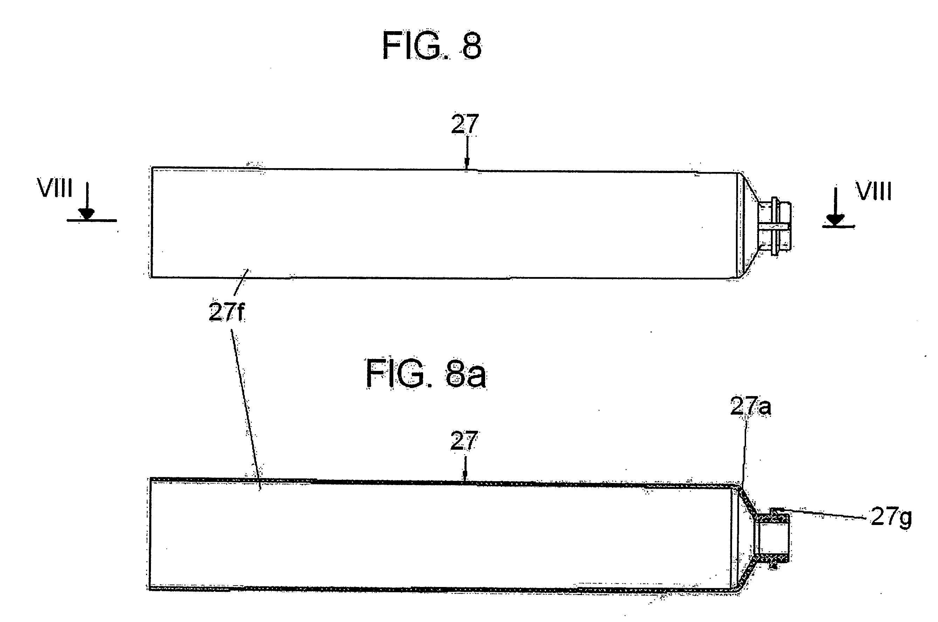

The bottomless bottle container 27 shown in Figs 8 and 8a has its collar portion 27c provided with, e.g. a peripheral edge 27g for snapping engagement with a removable cap (not shown).

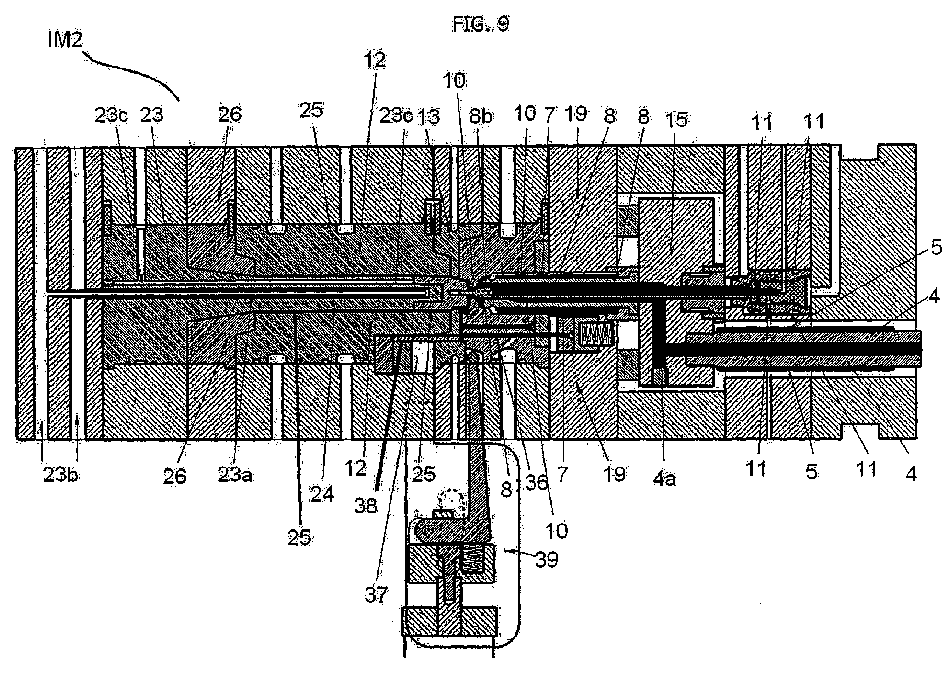

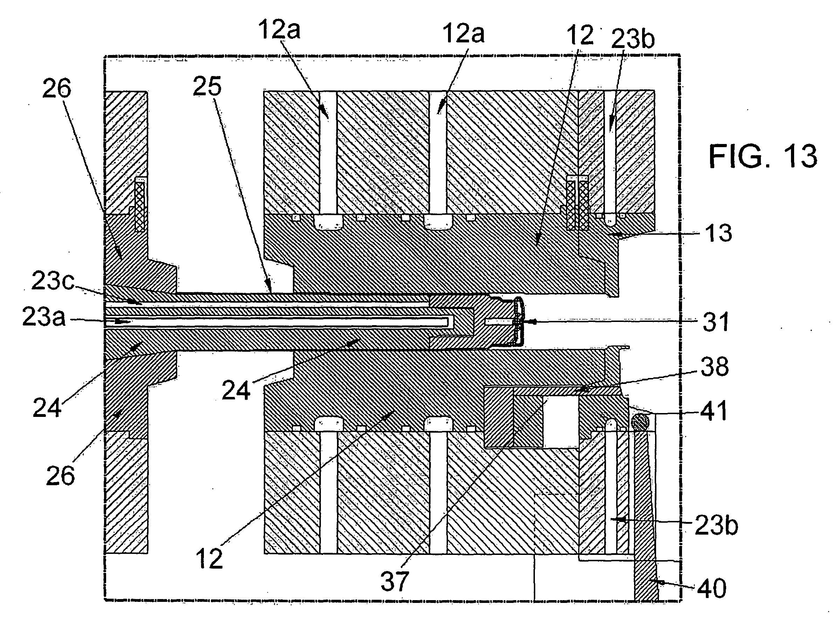

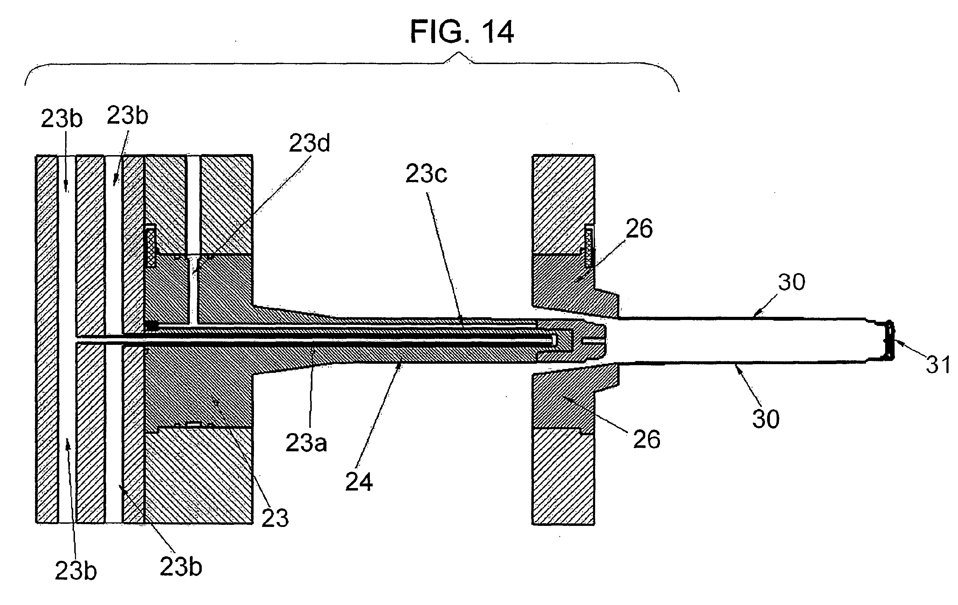

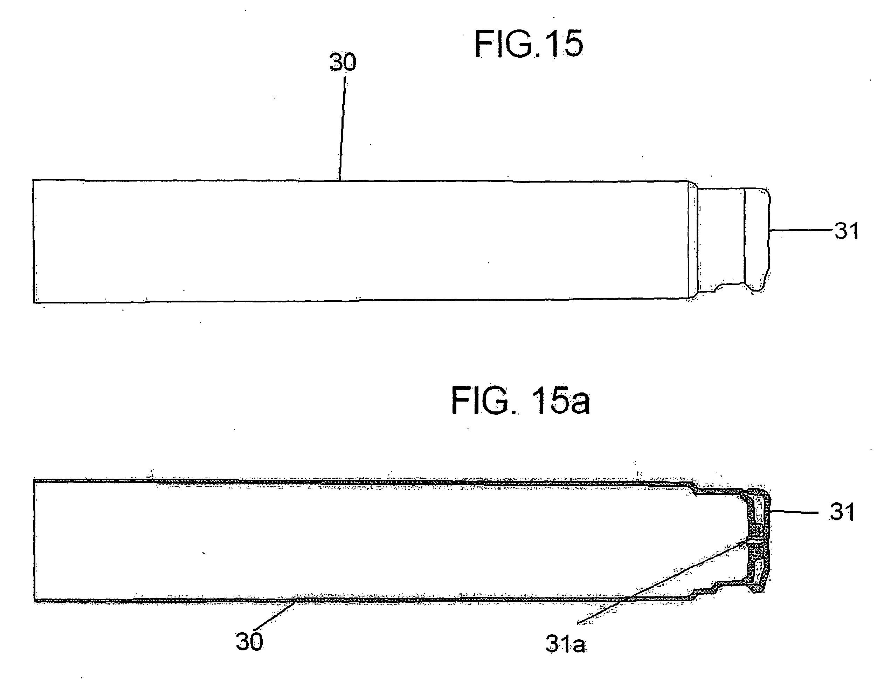

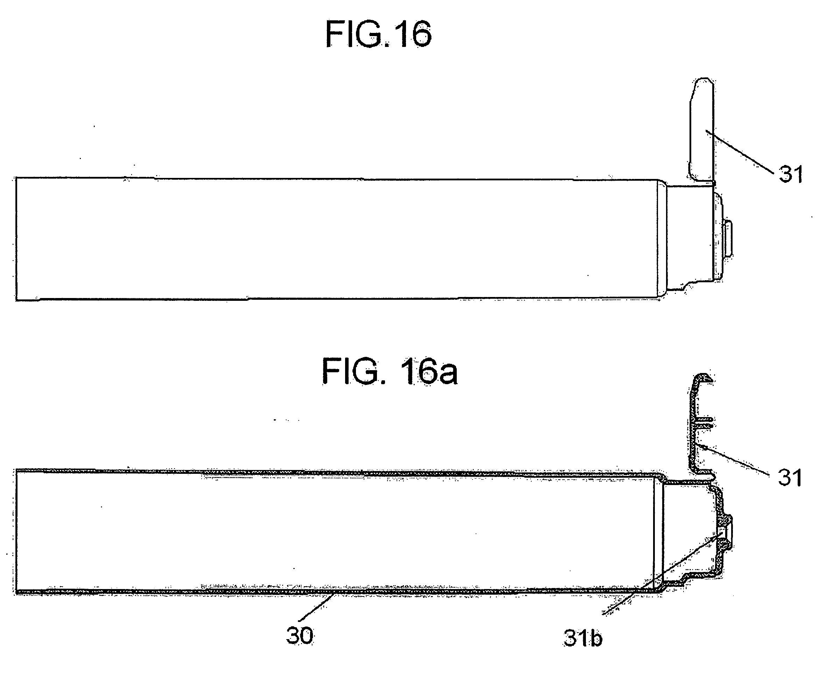

Figs. 9 to 14 illustrate an injection mould IM2 similar to that shown in Figs 1 to 6, and thus it deemed not necessary to describe it in detail, and has additional components for obtaining a bottomless bottle container 30 provided with a flip-top cap 31 as shown in Figs. 15, 15a and 16, 16a.

The injection mould IM2 has a lateral front moulding gap or seat 32 formed in its intermediate matrix member 13, on the one side, and on its injection matrix member 14, on the other, where a front recess 14b is also formed. Injection gap 32 is shaped in such a way as to produce a flip-top cap 31 and thus is in fluid communication with the injection gap 25, when the plug portion 3 is in its moulding position.

The spacer member 19 is formed with a seat 33 having its longitudinal axis parallel to the moulding cavity and in which a slide member 34 is slidably mounted. One side of the slide member 34 is loaded by a resilient means, e.g. a spring 35, whereas its other side is in abutting engagement with a sliding rod 36 that can be pushed to project into the moulding gap 32 as further explained below.

A longitudinal seat 37 extending parallel to the moulding cavity 2 is also provided in the main matrix member 12 and extends throughout the intermediate matrix member 13 to reach the moulding gap 32. The seat 37 locates a sliding rod member 38 that can be moved back and forward by any suitable driving means, e.g. a double acting cylinder and piston unit such as the unit 11.

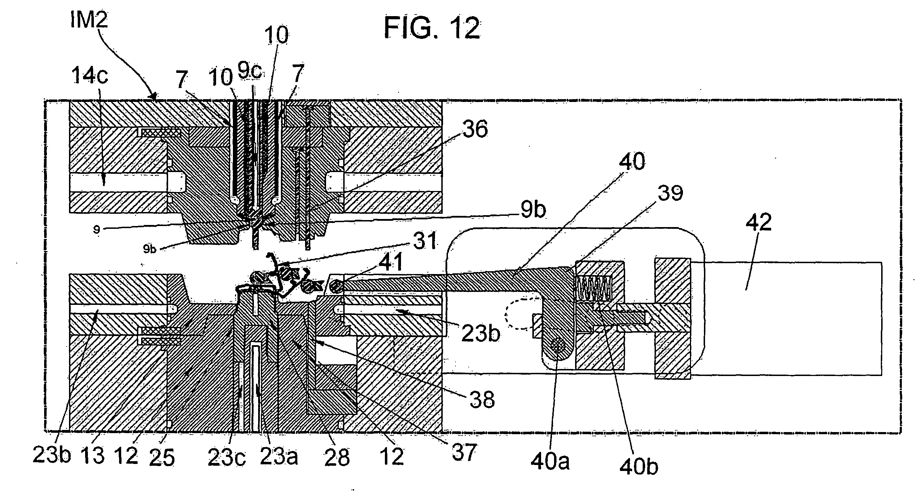

Moreover, the main matrix member 12 laterally supports a pusher assembly 39 (Fig. 12) comprising a pusher arm 40, preferably provided with a round tip 41, and a driving means, e.g. a linear actuator 42 of any suitable type, and thus the pushing arm can be radially displaced with respect to the moulding cavity 2 between a distal position away from the moulding seat or gap 32 and a proximate position above the cap-shaped shoulder member 28 as further explained below.

The pusher arm 40 is configurated as a bell lever fulcrumed about a pin 40a and is spring loaded by a spring 40b so as to resiliently engage with a flip-top cap 31 (Fig. 12).

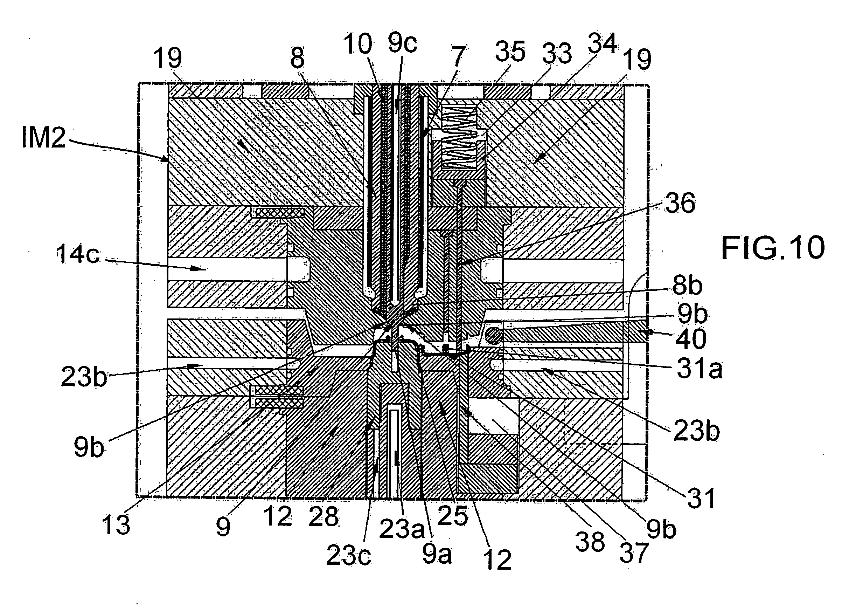

During an injection moulding operation (Fig. 9) the sliding rod 36 is in its withdrawn position in seat 32 and the pusher arm 40 is at its distal position. When injection moulding is terminated and spindle 9 is moved to its plugging position, the moving assembly formed by the main matrix member 12 and the intermediate matrix member 13 are moved away from the injection matrix member 14 (Fig. 10) and the sliding rod 36 gradually projects from the injection matrix member 14 in order to hold the flip-top cap 31 in position inside the moulding gap 32 in the initial extraction stage.

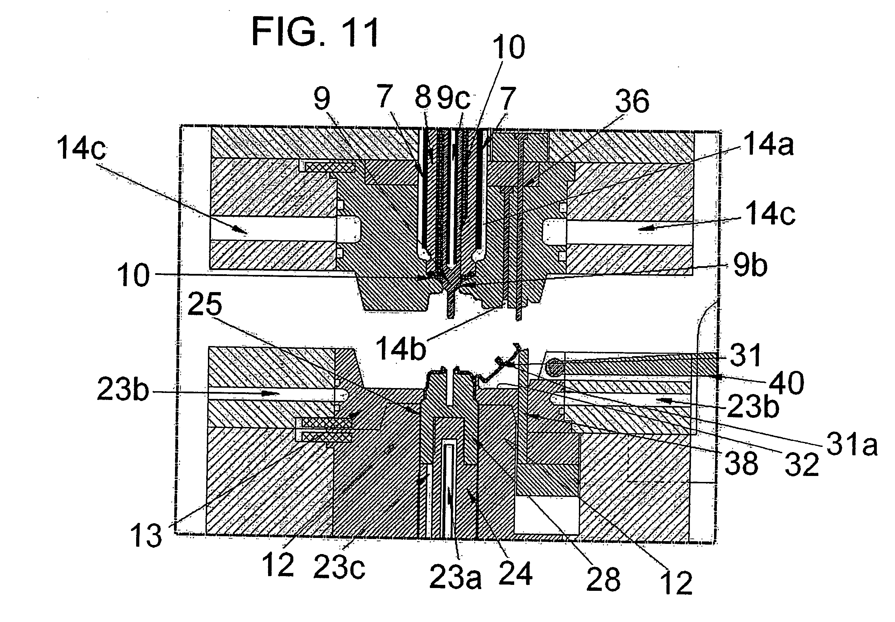

As the moving assembly is further displaced from the injection matrix member 14 driving means of the sliding rod member 38 are energized to moved the rod member forward so as to raise the flip-top cap 31 from the injection gap 32 (Fig. 11), after which the driving means 42 radially displaces the pusher arm 40 that with its round tip 41 pushes the cap 31 to its closed position onto the top of the bottle container 30 (Fig. 12). The bottle container 30 is then extracted from overhanging plug portion 24 as explained above.

As is better shown in Figs. 15a and 16a the tip-top cap 31 has a central plugging extension 31a formed in the recess 14b of the injection matrix member 14 designed to plug the top central opening 31b formed by the thinner tip 9a of spindle 9.

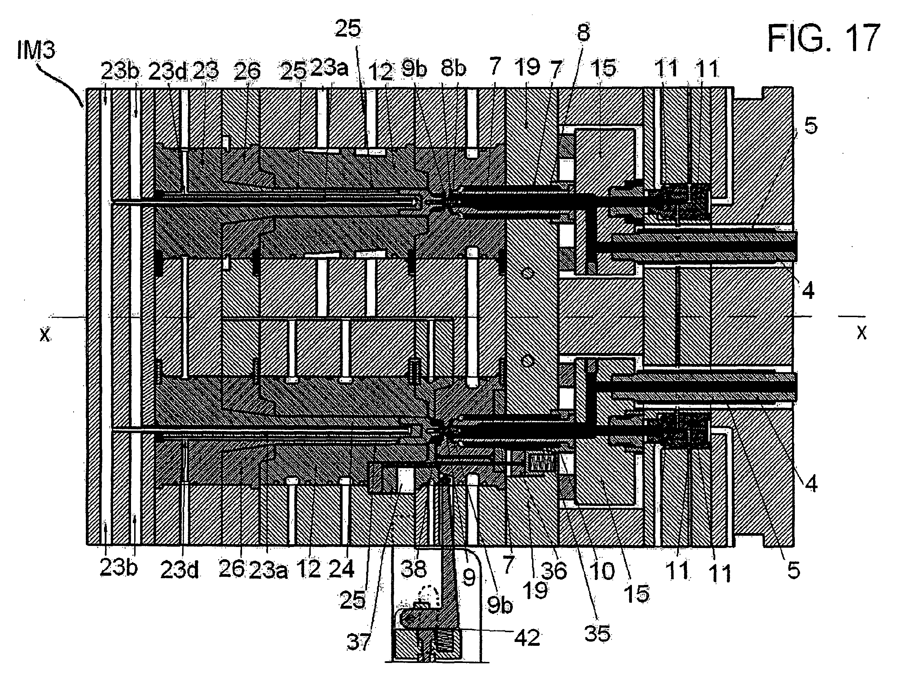

The embodiment illustrated in Figs. 17 to 21 relates to a multiple injection mould IM3 including an injection mould IM1 as shown in Figs 1 to 6 and an injection mould IM2 as shown in Figs. 9 to 14 with some modifications. In general, multiple mould IM3 can be described as being substantially symmetrical with respect to an axis of symmetry X-X in Fig. 17. However, that portion of multiple mould IM3 corresponding to mould IM1 does not include an intermediate matrix member 13, the injection matrix member 14 also acting as intermediate matrix member. Moreover, the main matrix member 12 is fixed in abutting engagement with the injection matrix member 14.

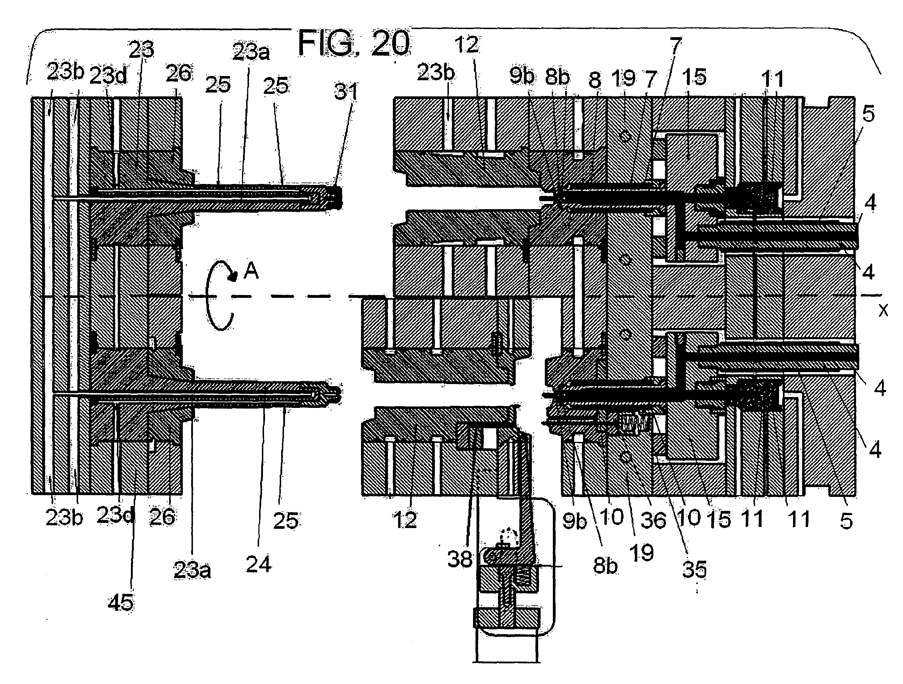

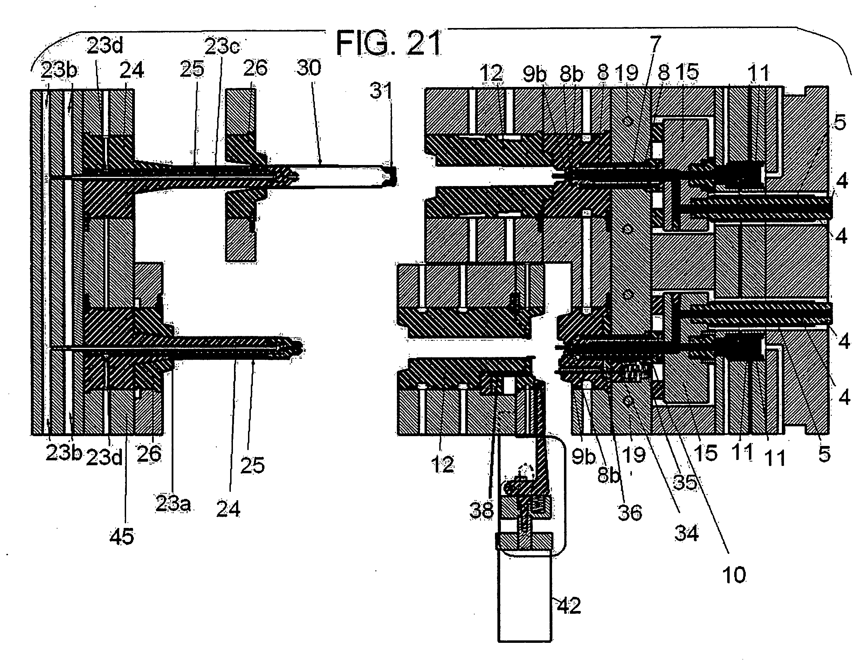

The matrix member 23 together with its extraction metal ring 26 in the portion of multiple mould IM3 corresponding to mould IM1 is mounted in a support member 45 that also carries the matrix member 23 and its extraction metal ring 26 of the mould corresponding to mould IM2 (Figs. 20 and 21). Support member 45 is both mounted for rotation about the axis of symmetry X-X as indicated by an arrow A in Fig. 20 and displaceable backward and forward parallel to the axis of symmetry X-X in any suitable manner as it would appear apparent for a person skilled in the art.

In the injection mould IM3 a tip-top cap 31 is formed on a second step following the injection step of the bottle container 30. More particularly, a bottle container 30 is formed in the portion of the mould corresponding to mould IM1, then the support member 45, and thus the plug portion 3 of the same mould, is moved away from its moulding cavity 2 together with the plug portion 3 in the portion corresponding to mould IM2 (Fig. 20). Support member 45 is then rotated through an angle of 180 degrees, so that the bottle container 30 can be introduced into the moulding cavity 2 of mould IM2 where a tip-top cap 31 of a different material or differently coloured material is injection formed (Fig. 17), while at the same time a new bottle container 30 is being formed in the mould IM1.

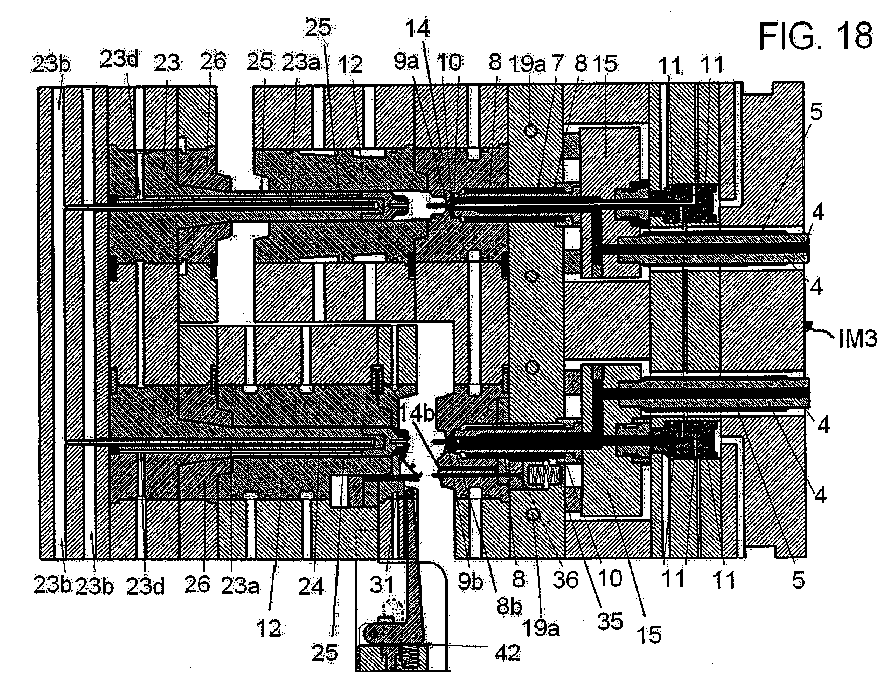

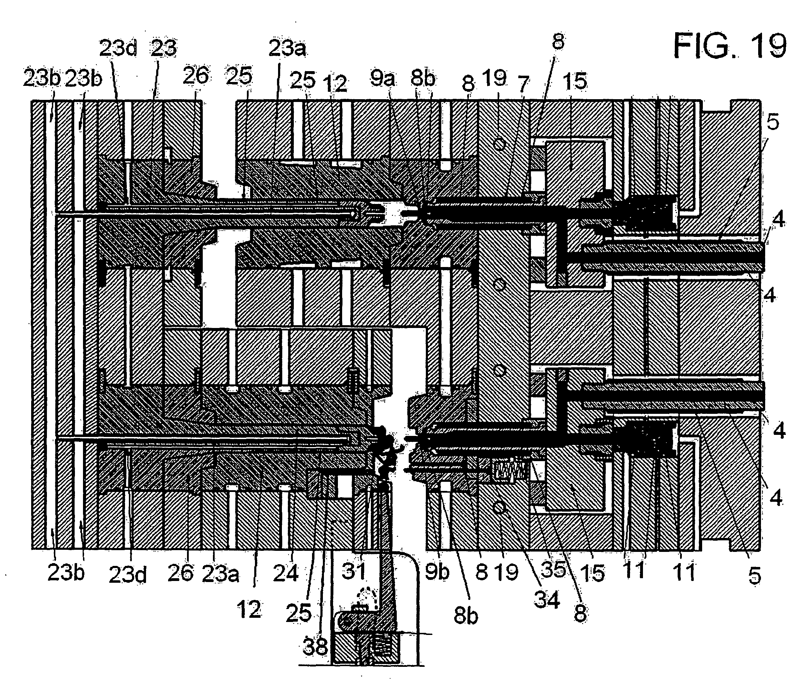

Support member 45 together with the main matrix member 12 and intermediate matrix member 13 of mould IM2 is moved one step backwards (Fig. 18) to allow tip-top cap 31 to be tipped over the collar top of the bottle container 30 (Fig. 19).

The support member 45 is subsequently displaced away from both moulding cavities 2 and rotated through 180 degrees (Fig. 20) before initiating an extraction operation as explained above through the use of the metal extraction ring 26 (Fig. 21).

The invention as described above is susceptible to numerous modifications and variations within the scope as defined by the claims.

Thus, the injection mould IM1, IM2 and IM3 can have a plurality of moulding cavities 2 and respective overhanging portions 24 so as to produce a multiplicity of bottle containers 27 or 30 in each injection moulding operation, preferably in material or in a differently coloured material.

## Claims

1. An injection mould for producing at least one bottomless bottle container(37, 30) of thermoplastic material, said injection mould having
a stationary or die injection part (1) in fluid communication with a source of pressurized molten thermoplastic material at one end thereof, and formed with at least one open moulding cavity (2), and
a movable plug-extraction part (3) having at least one overhanging portion (24) so shaped as to enter a respective moulding cavity (2) in said stationary injection part (1) and delimit therewith a peripheral injection gap (25), and arranged, in use, to be displaced between a rest position away from said stationary injection part (1) and a moulding position in which said overhanging portion (24) thereof is inserted into a respective moulding cavity (2),
**characterized in that**
each injection gap (25) comprises a first cylindrical length and a second shoulder length with a collar end portion to obtain a bottomless bottle (27, 30) provided with shoulder-collar portion (27a, 27c).

2. An injection mould as claimed in claim 1, **characterized in that** said stationary or die injection part (1) comprises
an inner hot chamber (6) provided with heating means (7) arranged to keep the injection material at a temperature equal or higher than its melting interval,
an inlet duct (4) in fluid communication on the one side with a source of pressurized molten thermoplastic material, and on the other with said inner hot chamber (6),
an injection nozzle member (8) extending throughout said hot chamber (6) and delimiting therewithin an inner longitudinal light (8a), said nozzle member (8) having an injection tip (8b) facing towards, and opening into, said moulding cavity (2),
a spindle member (9) located in said injection nozzle member (8) and arranged to delimiting therewith a peripheral gap (10) through which molten injection material coming from said inlet duct (4) can flow to said moulding cavity (2), said spindle member (9) having a front end portion (9b) designed to engage with said injection tip (8b) of said injection nozzle member (8), and a rear end extending beyond said injection nozzle (8), and
a driving means (11) engaging said rear end of said spindle member (9) and arranged longitudinally to displace backwards and forwards said spindle member (9), whereby said spindle member (9) is displaceable between a plugging position in which its front end portion (9a) engages with said injection tip (8b) of said injection nozzle member (8) to prevent molten material from flowing through said inner longitudinal light (8a) of said injection nozzle member (8) to said injection moulding cavity (2), and a withdrawn position in which molten material can flow through said injection nozzle member (8).

3. An injection mould as claimed in claim 2, **characterized in that** said spindle member (9) has a thinner front end (9a) extending through said injection tip (8b) of said injection nozzle member (8).

4. An injection mould as claimed in claim 2 or 3, **characterized in that** said spindle member (9) is formed with a dead axial bore (9c) in which a heating fluid for the injection molten material in the injection nozzle member (8) can flow.

5. An injection mould as claimed in any claim 2 to 4, **characterized in that** said hot chamber (6) extends parallel to, but offset with respect to said inlet duct (4) which comprises an intermediate inner transverse section (4a) opening into said hot chamber (6).

6. An injection mould as claimed in any claim 2 to 5, **characterized in that** said inlet duct (4) locates a heating means (5) arranged to control the injection material temperature.

7. An injection mould as claimed in any claim 2 to 5, **characterized in that** said die part (1) comprises a plurality of metal sections, i. e. in sequence from said moulding cavity (2),
a main matrix member (12) delimiting an inner cylindrical length of said moulding cavity (2) corresponding to bottle container body,
an injection matrix member (14) having an inner through light (14a), designed to locate at least said front end (9a) of said spindle member (9) and at least one portion of said heating means (7) for said hot chamber (6), and provided with inner ducts (14c) for a cooling/heating fluid in order to control the temperature of said molten material in said injection nozzle member (8),
a flow diverting member (15) for said molten injection material, formed with said transverse section (4a) of said inlet duct (4) and with a through aperture (16) in axial alignment with said through light (14a) in said matrix member (14) to slidably locate therein an intermediate portion of said spindle member (9), and
a socket member (17) locating therein said inlet duct (4) with heating means (5) as well as said driving means (11).

8. An injection mould as claimed in claim 7, **characterized in that** it comprises an intermediate matrix member (13) designed to delimit a shoulder portion of said bottle container and arranged between said main matrix member (12) and said matrix member (14).

9. An injection mould as claimed in claim 7 or 8, **characterized in that** said die part (1) comprises an auxiliary end member (18).

10. An injection mould as claimed in any claim 7 to 9, **characterized in that** said inner through light (14a) is in axial alignment with said moulding cavity (2).

11. An injection mould as claimed in any claim 7 to 10, **characterized in that** said main matrix member (12) and said intermediate matrix member (13) are slidably mounted so as to be displaceable between a closed working position and an open inoperative position, in which they are axially spaced apart from said injection matrix member (14).

12. An injection mould as claimed in any claim 7 to 11, **characterized in that** between said injection matrix member (14) and said flow diverting member (15) a spacer member (19) is provided having inner ducts (19a) for a heating fluid.

13. An injection mould as claimed in any claim 7 to 12, **characterized in that** said intermediate matrix member (13) comprises an inner sector matrix system (20) having at least two spring loaded jaw members (20a, 20b) radially slidable in a cavity (21) formed partly in the front face of said intermediate matrix member (13) and partly in the opposite face of said injection matrix member (14), to obtain a bottle container having a shoulder with an outer thread on its collar.

14. An injection mould as claimed in claim 13, **characterized in that** said each spring loaded jaw member (20a, 20b) has a peripheral inclined surface (22) designed slidably to shape engage with a respective inclined surface (22a) formed in said injection matrix member (14), whereby when the assembly formed by said main matrix member (12) and said intermediate matrix member (13) is in its closed position each jaw member (22a, 22b) is forced to move close around said front end (9a) of said spindle member (9), whereas when said assembly is moved to its open position said jaw members (22a, 22b) move radially apart.

15. An injection mould as claimed in any claim 1 to 14, **characterized in that** said movable extraction or male part (3) comprises a matrix member (23) having an overhanging plug portion (24) so shaped as to enter said moulding cavity (2) and delimit therewith a peripheral injection moulding gap (25), said male or plug part (3) being arranged, in use, to be displaceable between a rest position away from said die injection part (1) and a moulding position in which said overhanging plug portion (24) is inserted into said moulding cavity (2).

16. An injection mould as claimed in claim 15, **characterized in that** said male part (3) also comprises an extraction metal ring member (26) arranged axially displaceable independently of said matrix member (23).

17. An injection mould as claimed in claim 15 or 16, **characterized in that** said injection moulding gap (25) comprises a first cylindrical length within said main matrix member (12) and a second shoulder length delimited by said intermediate matrix member (13).

18. An injection mould as claimed in claim 14 and 17, **characterized in that** said injection moulding gap (25) is partly delimited by said sectors (20a, 20b) to obtain a bottomless bottle container provided with a threaded collar (27a).

19. An injection mould as claimed in any claim 15 to 18, **characterized in that** said matrix member (23) is formed with a an axial inner bore (23a) extending throughout said overhanging plug portion (24) and is in fluid communication with a cooling fluid source through a duct (23b).

20. An injection mould as claimed in claim 19, **characterized in that** said duct (23b) is connected in fluid communication with ducts (12a) formed in said main matrix member (12).

21. An injection mould as claimed in claim 19 or 20, **characterized in that** said matrix member (23) is formed with a longitudinal duct (23c) offset with respect to said axial bore (23a) and in fluid communication with a compressed aid source to deliver compressed air between said overhanging plug portion (24) and a bottle container (27) injection formed thereon.

22. An injection mould as claimed in claim 15 to 21, **characterized in that** said overhanging plug member (24) terminates with a cap-shaped shoulder member (28) secured onto said plug member (24).

23. An injection mould as claimed in claim 22, **characterized in that** said shoulder member (28) terminates with a tapered shoulder portion (28a) and a collar portion (28b).

24. An injection mould as claimed in claim 23, **characterized in that** said collar portion (28b) is formed with an axial dead hole (29) arranged to removably receive said front end (9a) of said spindle member (9).

25. An injection mould as claimed in any claim 14, 18, 23 and 24, **characterized in that** said collar portion (28b) is provided with an outer thread (28c) having the same pitch as that of said thread provided in said jaw members (20a, 20b).

26. An injection mould as claimed in any claim 7 to 25, **characterized in that** it comprises a lateral front moulding seat (32) formed in said intermediate matrix member (13), on the one side, and on said injection matrix member (14) to produce a flip-top cap (31).

27. An injection mould as claimed in any claim 26, **characterized in that** a front recess (14b) is formed in said injection matrix member (14).

28. An injection mould as claimed in any claim 26 or 27, **characterized in that** said injection seat (32) is in fluid communication with said injection moulding gap (25), when said plug portion (3) is in its moulding position.

29. An injection mould as claimed in any claim 7 to 28, **characterized in that** said spacer member (19) is formed with a seat (33) having its longitudinal axis parallel to said moulding cavity (2), a slide member (34) slidably mounted in said moulding cavity (33), a resilient means spring loading one side of said slide member (34), and a sliding rod (36) in abutting engagement with the other side of said slide member (34) to be pushed so as to project into said moulding seat (32).

30. An injection mould as claimed in any claim 7 to 29, **characterized in that** it comprises a longitudinal seat (37) extending parallel to said moulding cavity 2 is provided in said main matrix member (12) and extends throughout said intermediate matrix member (13) to reach said injection moulding seat (32), a sliding rod member (38) movable back and forward in said longitudinal seat (37), and driving means for said sliding rod member (38).

31. An injection mould as claimed in claim 30, **characterized in that** said main matrix member (12) laterally supports a pusher assembly (39) comprising a pusher arm (40), and a driving means (42) of any suitable type, whereby said pushing arm can be radially displaced with respect to said moulding cavity (2) between a distal position away from said moulding seat (32) and a proximate position above said cap-shaped shoulder member (28).

32. An injection mould as claimed in claim 31, **characterized in that** said pusher arm (40) has a round tip (41).

33. An injection mould as claimed in claim 31 or 32, **characterized in that** said pusher arm (40) is in the form of a bell lever articulated about a pin (40a) and spring loaded by a spring means (40b) so as to resiliently engage with a flip-top cap (31).

34. An injection mould as claimed in any previous claim, **characterized in that** said die part (1) has at least two moulding cavities (2) and said plug-extraction part (3) comprises a support member (45) designed to support at least two matrix members (23) with a respective extraction metal ring (26), said support member (45) being mounted for rotation step-by-step about the axis of rotation and displaceable backward and forward in a direction parallel to said axis of rotation.

35. A bottomless bottle container of a thermoplastic material having a body portion (27f), shoulder portion (27a) and a collar portion (27c) integrally obtained by a single injection moulding operation when using an injection mould according to any previous claim.

36. A bottomless bottle container as claimed in claim 35, **characterized in that** it comprises a thread (27d) on said collar portion (27c) for threading engagement with a screw cap.

37. A bottomless bottle container as claimed in claim 35, **characterized in that** it comprises an edge portion (27g) on said collar for snap-engagement with a snap cap.

38. A bottomless bottle container as claimed in claim 35, **characterized in that** it comprises a flip-top cap (31).
